# EUROPEAN PATENT SPECIFICATION

(11) **EP 4 270 542 B1**
(45) Date of publication and mention of the grant of the patent: **25.11.2026**
(21) Application number: 21911000.4
(22) Date of filing: 23.12.2021
(51) Int. Cl.: H01M 4/62, H01M 4/38, H01M 4/36, H01M 4/587, H01M 10/0525, H01M 10/0566

(54) **NEGATIVE-ELECTRODE MATERIAL FOR SECONDARY BATTERY, AND SECONDARY BATTERY**
NEGATIVELEKTRODENMATERIAL FÜR SEKUNDÄRBATTERIE UND SEKUNDÄRBATTERIE
MATÉRIAU D'ÉLECTRODE NÉGATIVE POUR BATTERIE SECONDAIRE ET BATTERIE SECONDAIRE

(30) Priority: 25.12.2020 JP 2020217403
(43) Date of publication of application: 01.11.2023
(73) Proprietor: Panasonic Intellectual Property Management Co., Ltd., Kadoma-shi, Osaka 571-0057 (JP)
(72) Inventor: HASEGAWA, Masaki, Kadoma-shi, Osaka 571-0057 (JP); YAMAMOTO, Norihisa, Kadoma-shi, Osaka 571-0057 (JP); WATANABE, Takashi, Kadoma-shi, Osaka 571-0057 (JP)
(74) Representative: Novagraaf International SA
(86) International application number: PCT/JP2021/048000
(87) International publication number: WO 2022/138861

(56) References cited:
- EP-A1- 3 754 762
- CN-A- 109 546 127
- JP-A- 2014 146 519
- JP-A- 2015 167 127
- JP-A- 2015 185 229
- JP-A- 2016 139 548
- JP-A- 2017 084 759
- JP-A- 2017 084 759
- US-A1- 2018 277 837

## Description

### TECHNICAL FIELD

The present disclosure relates to a secondary battery, particularly to an improvement in a negative electrode used for a secondary battery.

### BACKGROUND ART

Non-aqueous electrolyte secondary batteries such as lithium ion secondary batteries have a high output and a high energy density. Therefore, non-aqueous electrolyte secondary batteries are used as a power source for small consumer applications, power storage devices, and electric vehicles.

For the negative electrode active material of non-aqueous electrolyte secondary batteries, conventionally, various materials have been proposed. As a negative electrode active material with a high energy density, use of a silicon compound (e.g., silicon oxide) that forms an alloy with lithium, and silicon particles has been proposed conventionally (e.g., Patent Literature 1).

Patent Literature 2 has disclosed an electrically conductive composite including a carbon nanotube having an outer diameter of 1 nm to 6 nm, fine particles of 1000 µm or less, and a dispersing agent, wherein the carbon nanotube dispersed by the dispersing agent covers the surface of the fine particles. The fine particles are, for example, graphite particles having an average particle size of 20 µm, and use of the electrically conductive composite for a negative electrode of a lithium ion secondary battery is proposed.

Patent Literature 3 has proposed use of a composite of an electrode active material and a carbon nanotube, the composite containing the electrode active material and a fibrous carbon nanotube forest composed of a single-walled carbon nanotube having an average diameter of 10 nm to 20 µm, for a negative electrode of a lithium ion secondary battery

Patent Literature 4 discloses a negative electrode material comprising graphite, a material including silicon, and a carbon nanotube.

### Citation List

### Patent Document

Patent Literature 1: Japanese Unexamined Patent Publication No. 2010-212228
Patent Literature 2: Japanese Unexamined Patent Publication No. 2011-076948
Patent Literature 3: Japanese Unexamined Patent Publication No. 2017-084759
Patent Literature 4: EP 3 754 762 A1

### SUMMARY OF THE INVENTION

### PROBLEM TO BE SOLVED BY THE INVENTION

As a ratio of carbon nanotube to the electrically conductive composite, Patent Literature 2 describes that the amount of carbon nanotube in the negative electrode is 0.1 mass% to 20 mass%, and Patent Literature 3 describes that the mass ratio of the active material relative to carbon nanotube is 1 to 500. A large amount of carbon nanotube is included in the negative electrode.

Furthermore, in Patent Literature 2, a composite is formed in which the surface of active material particle is covered with carbon nanotube, and in Patent Literature 3, a composite is formed in which the active material particles are embedded in the carbon nanotube forest. To form such a composite, it may necessitate a special production step, and when including a generally used step of applying a slurry of a mixture of materials for the configuration added to a dispersion medium, the viscosity of the slurry increases, which may cause homogenous application difficult. Furthermore, a relatively expensive carbon nanotube has to be included in the negative electrode in a large amount, and therefore the production costs increase.

### MEANS FOR SOLVING THE PROBLEM

In view of the above, an aspect of the present disclosure relates to a negative electrode material for a secondary battery including a negative electrode active material and a carbon nanotube, wherein the negative electrode active material includes graphite, and a material including a silicon element, the carbon nanotube has an average fiber diameter of 0.5 nm to 6 nm and an average fiber length of 1.2 µm to 8 µm.

Another aspect of the present disclosure relates to a secondary battery including a negative electrode including the above-described negative electrode material for a secondary battery, a positive electrode, a separator disposed between the positive electrode and the negative electrode, and an electrolyte.

### EFFECTS OF THE INVENTION

The present disclosure achieves a secondary battery with low costs and excellent characteristics.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

[FIG. 1] FIG. 1 is a schematic partially cutaway oblique perspective view of a secondary battery of an embodiment of the present disclosure.
[FIG. 2] FIG. 2 is a graph illustrating changes in deterioration rate relative to changes in the average fiber length of carbon nanotube in a secondary battery in an embodiment of the present disclosure, setting the deterioration rate in the case of the average fiber length of 3.23 µm as an index.
[FIG. 3] FIG. 3 is a graph illustrating changes in the deterioration rate in the average fiber diameter of carbon nanotube in a secondary battery in an embodiment of the present disclosure.

### DESCRIPTION OF THE EMBODIMENTS

### [Negative electrode material for secondary battery]

In a negative electrode material for a secondary battery (in the following, may be referred to as "negative electrode material") in the embodiment of the present disclosure includes a negative electrode active material and a carbon nanotube. The negative electrode active material includes graphite, and a material including a silicon element. The carbon nanotube has an average fiber diameter of 0.5 nm to 6 nm, and an average fiber length of 1.2 µm to 8 µm. Thus, even when a material including a silicon element which goes through a great volume change involved with charge/discharge is used for a negative electrode active material, deficiency in current collecting of the negative electrode active material (graphite and material including a silicon element) involved with volume changes is suppressed, and the capacity retention rate can be kept high.

### (Carbon nanotube)

Carbon nanotubes are a carbon fiber having a small fiber diameter of nano-order, and has a significantly large aspect ratio (ratio of fiber length to fiber outer diameter). With a carbon fiber having a high aspect ratio, contact between the active materials, and the active material and current collector are not a point contact, but a line contact. Carbon fibers with excellent electrical conductivity are present between the active material particles, and form a line contact portion with the particles. In this manner, carbon nanotubes with excellent electrical conductivity form a line conductive path between the active materials and between the active material and current collector, and form line contact portions with the current collector, improving current collecting characteristics.

The carbon nanotube has an average fiber length of 1.2 µm or more. In this case, even when the volume of the negative electrode active material changes greatly by charge/discharge, the line contact with the carbon nanotube fiber is kept along with the volume changes, and electrical connection with the negative electrode active material can be kept. When the carbon nanotube has an average fiber length of 1.2 µm or more, deficiency in current collecting is significantly suppressed. The average fiber length may be 1.5 µm or more, or preferably, 2 µm or more.

Meanwhile, along with a longer average fiber length of the carbon nanotube, the carbon nanotubes easily coagulate, which may cause poor dispersibility or increase in the slurry viscosity accompanied by carbon nanotube coagulation in the slurry production. Also, with a longer average fiber length, the carbon nanotube content in the negative electrode material increases to ensure a necessary number of carbon nanotubes, making it difficult to achieve a high capacity. To achieve a high capacity, and in the negative electrode material production, to easily produce a slurry in which carbon nanotube is dispersed with the negative electrode active material, and to suppress increase in the slurry viscosity, the carbon nanotube has an average fiber length of 8 µm or less. The average fiber length may be 6 µm or less, or preferably, 4 µm or less. When the carbon nanotube has an average fiber length of 4 µm or less, the carbon nanotube coagulation is suppressed, and excellently dispersed slurry can be easily obtained.

The carbon nanotube has an average fiber length of 1.2 µm to 8 µm, 1.2 µm to 6 µm, or 1.2 µm to 4 µm, or 1.5 µm to 4 µm, and preferably, in a range of 2 µm to 4 µm.

The carbon nanotube has an average fiber diameter of, in view of production without difficulties, 0.5 nm or more, and preferably, 1 nm or more. Meanwhile, with a larger average fiber diameter of the carbon nanotube, the number of the carbon nanotube included in the negative electrode material is reduced when the amount of the carbon nanotube included is the same, making it difficult to suppress current collecting defects. The current collecting defects can be suppressed by increasing the amount of the carbon nanotube contained, but with a larger amount of the carbon nanotube in the slurry, the carbon nanotubes are easily coagulated in the slurry, making homogeneous dispersion difficult, and easily increasing the slurry viscosity. Thus, the carbon nanotube has an average fiber diameter of 6 nm or less, to make production of slurry in which the carbon nanotube is dispersed along with the negative electrode active material easily, in production of the negative electrode material, and to suppress the increase in the slurry viscosity. Setting the average fiber diameter to 6 nm or less, the current collecting defects are significantly suppressed, and also an easily producible negative electrode material can be obtained. The carbon nanotube preferably has an average fiber diameter of 4 nm or less, and more preferably 3 nm or less.

The carbon nanotube may have an average fiber diameter of 0.5 nm to 6 nm, or 1 nm to 6 nm, and preferably, in a range of 1 nm to 4 nm or 1 nm to 3 nm.

The average fiber length of the carbon nanotube can be determined by image analysis using a scanning electron microscope (SEM). The average fiber length can be determined, for example, by randomly selecting a plurality of (e.g., 100 to 1000) carbon nanotubes to measure the fiber length, and averaging them. The fiber length means a length in a linear state. The fiber diameter is a length in a direction perpendicular to the fiber length direction, and means an outer diameter of the carbon nanotube. It has been known that carbon nanotubes may form a state called a bundled state, in which a plurality of, not a single fiber, of carbon nanotubes are put together, and the average length in this bundled state can be regarded as a fiber length of carbon nanotubes. The average fiber diameter of the carbon nanotube can be determined by image analysis using a transmission electron microscope (TEM). Furthermore, in the case of a carbon nanotube having 2 or less layers of tube walls, the diameter can be estimated by analyzing RBM (Radial Breathing Mode) that appears in a range of 150 cm⁻¹ to 300 cm⁻¹ of a Raman shift in Raman spectrum.

Carbon nanotubes may be single-walled, double-walled, or multi-walled. Preferably, a single-walled carbon nanotube is used because a great effect can be achieved with a small amount. The carbon nanotube with an average fiber diameter of 5 nm or less includes many single-walled carbon nanotubes. The single-walled carbon nanotube can be 50 mass% or more of the entire carbon nanotube.

In the negative electrode material, the carbon nanotube content relative to the entire negative electrode active material may be 0.005 mass% to 0.1 mass%, or 0.005 mass% to 0.07 mass%. With this embodiment, even with a small carbon nanotube content, by setting the average fiber length and average fiber diameter of the carbon nanotube each to the above-described range, current collecting defects can be suppressed. By setting the carbon nanotube content to 0.005 mass% or more, effects of suppressing current collecting defects can be excellently achieved. By setting the carbon nanotube content to 0.1 mass% or less, a slurry in which carbon nanotube is dispersed along with the negative electrode active material can be easily produced, and the increase in the slurry viscosity is suppressed. Also, the increase in production costs due to use of carbon nanotubes can be suppressed, and the present negative electrode material can be obtained with a minimum increase in production costs.

The carbon nanotube content relative to the entire negative electrode active material may be 0.005 mass% or more, 0.01 mass% or more, or 0.02 mass% or more. The carbon nanotube content relative to the entire negative electrode active material may be 0.1 mass% or less, 0.07 mass% or less, 0.05 mass% or less, or 0.04 mass% or less. These lower limits and upper limits can be combined arbitrarily.

The carbon nanotube content relative to the entire negative electrode active material is determined with a sample obtained by taking out only a negative electrode active material layer (negative electrode mixture layer) in a secondary battery in a discharged state. Specifically, first, a secondary battery in a discharged state is disassembled and the negative electrode is taken out. Then, the negative electrode is washed with an organic solvent, and further dried under vacuum, and then removing only the negative electrode active material layer to obtain a sample. The ground sample is dispersed in a dispersion medium such as water and alcohol, and centrifugal separation is performed to separate the carbon nanotube. The sample is subjected to thermal analysis such as TG-DTA, by which the ratio of the binder component and conductive agent component other than the negative electrode active material can be calculated. By performing micro-Raman spectroscopy on cross sections of the negative electrode active material layer, types of carbon can be identified such as carbon nanotube and acetylene black, and the ratio can be calculated based on thermal analysis such as TG-DTA on the separated sample.

### (Negative electrode active material)

For the negative electrode active material, a metal lithium, or a lithium alloy may be used, but a material that is capable of electrochemically storing and releasing lithium ions is suitably used. For such a material, the negative electrode active material includes graphite and a material including a silicon element (in the following, referred to as "Si-containing material").

Graphite includes, for example, natural graphite, artificial graphite, graphitized mesophase carbon particles, and the like. For the graphite, known graphite used as the negative electrode active material may be used. A carbon material other than graphite can be included in the negative electrode active material. Examples of the carbon material other than graphite include graphitizable carbon (soft carbon) and non-graphitizable carbon (hard carbon). A kind of carbon material may be used singly, or two or more kinds thereof may be used in combination. Of the carbon materials, in particular, graphite is preferable in view of excellent charge/discharge stability, and small irreversible capacity.

Graphite means a material in which graphite type crystal structure is developed, and generally, refers to a carbon material having an average interplanar spacing d₀₀₂ of (002) plane measured by X-ray diffraction of 0.340 nm or less.

Examples of the Si-containing material include Si simple element, a silicon alloy, a silicon compound (silicon oxide, etc.), and a composite material in which a silicon phase is dispersed in a lithium ion conductive phase (matrix). Examples of the silicon oxide include SiO_{X} particles. "X" may be, for example, 0.5 ≤ X< 2, or 0.5 ≤ X< 1.6 or 0.8 ≤ X ≤ 1.6. Examples of the lithium ion conductive phase include at least one selected from the group consisting of a SiO₂ phase, silicate phase, and carbon phase.

Examples of the Si-containing material include at least one of particles selected from the group consisting of first particles including a silicon oxide represented by a formula SiO_{X} (0.5 ≤ X< 1.6), second particles including a lithium silicate phase and a silicon phase dispersed in the lithium silicate phase, and third particles including a carbon phase and a silicon phase dispersed in the carbon phase. By using the particles including silicon as the negative electrode active material, the battery capacity can be increased. Meanwhile, the particles including silicon go through a large volume change involved with lithium ion storage and release, and repetitive charge/discharge may easily cause current collecting defects. When the current collecting defects occur, electrical connection between the particles including silicon and other negative electrode active material or current collector is disconnected, and the particles including silicon are isolated. The isolated particles cannot contribute to a capacity, and therefore, the capacity retention rate decreases as a result of current collecting defects. However, when the negative electrode material includes the carbon nanotube having the above-described average fiber diameter and average fiber length, current collecting defects are effectively suppressed, and the capacity retention rate can be kept high.

The Si-containing material may include plural types of particles selected from the group consisting of first particles, second particles, and third particles. For example, the Si-containing material may include two types of particles selected from these, or all of three types of particles. Specifically, the Si-containing material may include the first particles and second particles, the first particles and third particles, or the second particles and third particles. Alternatively, the Si-containing material may include all of the first, second, and third particles. Preferably, the Si-containing material is used as the negative electrode active material in combination with graphite.

Graphite included in the negative electrode active material preferably has an average particle size of 10 µm to 30 µm. Preferably, the average particle size (average particle size of each of first particles, second particles, and third particles) of the Si-containing material included in the negative electrode active material is 1 µm to 20 µm, or more preferably 5 µm to 15 µm. In this case, the effects of suppressing current collecting defects are prominent by the negative electrode material including carbon nanotube having the above-described fiber diameter and fiber length. The average particle size can be determined by observing cross sections of the negative electrode active material layer using an SEM or TEM. Types of the particles are identified by micro-Raman spectroscopy, and grain boundaries of each of the particles are determined from cross sectional images, and the diameter of a circle having an area equivalent to the area defined by the grain boundary is regarded as a particle size. At least 100 particles are randomly selected to determine the average value of the particle size to be regarded as the average particle size.

For the average particle size of the particles before forming the negative electrode active material layer, a median diameter (D50) at which the cumulative volume is 50% in the volume-based particle size distribution can be used. The median diameter can be determined using, for example, a laser diffraction/scattering particle size distribution analyzer.

The negative electrode active material may include other active material other than graphite and Si-containing material. Examples of the other active material include carbon material other than graphite such as graphitizable carbon (soft carbon), non-graphitizable graphite carbon (hard carbon).

When the negative electrode active material includes the graphite and Si-containing material, the Si-containing material content relative to the total of the graphite and Si-containing material may be 5 mass% to 50 mass%. With this configuration, even higher capacity can be achieved compared with a case where the negative electrode active material is only graphite. Preferably, the Si-containing material content relative to the total of graphite and Si-containing material is 6 mass% to 20 mass%.

The graphite content in the negative electrode active material may be in the range of 50 mass% to 99 mass%. When the particles of the Si-containing material include graphite on the surface and/or inside thereof, the graphite thereof is not included in the above-described graphite content. The graphite content is a content of graphite not included in the Si-containing material.

### (First particles)

The first particles are a mixture of SiO₂ and Si fine particles at a microscopic level. The first particles include silicon oxide represented by a formula SiO_{X} (0.5 ≤ X< 1.6). The first particles may include silicon oxide particles, and a carbon layer disposed surrounding the silicon oxide particles.

### (Second particles)

The second particles include a lithium silicate phase and silicon particles (silicon phase) dispersed in the lithium silicate phase. The lithium silicate phase may include lithium silicate represented by a formula Li_{2Z}SiO_{(2+Z)} (0 < Z< 2). Preferably, "Z" satisfies the relation 0 < Z< 1. 50 mass% or more (e.g., 60 mass% or more) of the lithium silicate phase may be formed of lithium silicate satisfying 0 < Z ≤ 0.5.

The second particles may include at least one element Me dispersed in the lithium silicate phase. At least one element Me is at least one selected from the group consisting of rare-earth elements and alkaline earth metal elements. Examples of the alkaline earth metal element include Mg, Ca, Sr, Ba, etc.

The element Me may be dispersed in the lithium silicate phase as Me oxide. The Me oxide may include at least one selected from the group consisting of yttrium oxide, cerium oxide, calcium oxide, and magnesium oxide. The lithium silicate phase may include zirconium oxide. The element Me may be dispersed in zirconium oxide.

For the amount of the element Me included in the second particles, the amount (presumed Me oxide amount) can be used as an indicator, which is calculated by assuming that, despite the conditions of element Me or types of the compound of element Me, element Me is forming a stoichiometric oxide. The presumed Me oxide amount may be, relative to a total of the lithium silicate phase and the silicon particles, in the range of 0.001 mass% to 1.0 mass%. By setting the presumed Me oxide amount to 0.001 mass% or more, the effects of reducing the reaction area and improving the hardness of the lithium silicate phase can be greater. Meanwhile, by setting the presumed Me oxide amount to 1.0 mass% or less, reduction in the initial capacity can be suppressed.

The lithium silicate phase may include a metal compound such as metal oxide, metal carbide, metal nitride, and metal boride. Suitable metal compounds are metal oxide and metal carbide. In particular, at least one selected from the group consisting of zirconium oxide (ZrO₂), aluminum oxide (Al₂O₃), zirconium carbide (ZrC), tungsten carbide (WC), and silicon carbide (SiC) is preferable. The amount of the metal element compound other than the element Me may be, relative to a total of the lithium silicate phase and the silicon particles, in a range of 0.005 mass% to 15 mass% (e.g., range of 0.01 mass% to 10 mass% or 0.01 mass% to 1 mass%). The amount of the metal element compound can be determined, similarly with the element Me content, by calculating the amount based on the assumption that the metal element forms a stoichiometric oxide.

The second particles may have an average particle size in a range of 1 µm to 25 µm (e.g., range of 4 µm to 15 µm). In such a range, the stress due to the volume change of the second particles along with charge/discharge can be relieved easily, and excellent cycle characteristics can be easily obtained. Furthermore, the second particles have a suitable surface area, and the capacity reduction based on side reactions with the non-aqueous electrolyte can be suppressed.

The crystallite size of the silicon particles dispersed in the lithium silicate phase is, for example, 10 nm or more. The silicon particles have a phase of simple silicon (Si) particles. When the silicon particles have a crystallite size of 10 nm or more, the silicon particles have a small surface area, and therefore deterioration of silicon particles which generates an irreversible capacity is hardly caused. The crystallite size of the silicon particles is calculated by the Sheller's equation from the half width of the diffraction peak assigned to the Si (111) plane in the X-ray diffraction (XRD) pattern of the silicon particles.

The silicon particles in the second particles may have an average particle size of, before initial charging, preferably 500 nm or less (more preferably 200 nm or less, even more preferably 50 nm or less). After the initial charging, the silicon particles have an average particle size of preferably 400 nm or less (more preferably 100 nm or less). By micronizing the silicon particles, the volume change during charging and discharging becomes small, and the structural stability of the second particles further improves.

In view of a high capacity and improvement in cycle characteristics, the second particles may have a silicon particle (simple element Si) content of preferably in a range of 20 mass% to 95 mass% (e.g., in a range of 35 mass% to 75 mass%). With this range, lithium ion diffusivity is excellent, and excellent load characteristics can be easily achieved. Furthermore, the surface of the silicon particle not covered with the lithium silicate phase and exposed is reduced, and side reactions between the non-aqueous electrolyte and silicon particles are suppressed.

The second particles may include a conductive material covering at least a portion of the surface thereof. Since the lithium silicate phase has poor electron conductivity, the electrical conductivity of the second particles tends to be low. By coating the surfaces with the conductive materials, the electrical conductivity can be dramatically enhanced. Preferably, the conductive layer is thin enough that it does not substantially affect the average particle size of the second particles. In view of ensuring electrical conductivity and lithium ion diffusivity, the thickness of the conductive layer may be, for example, 1 nm to 200 nm (e.g., in a range of 5 nm to 100 nm). Examples of the materials and the forming method of the conductive layer are to be described later.

### (Third particles)

The third particles include a carbon phase and silicon particles (silicon phase) dispersed in the carbon phase. The carbon phase of the third particles may be formed of amorphous carbon. The amorphous carbon may be a hard carbon or a soft carbon, or something else. The amorphous carbon is, generally, a carbon material with an average interplanar spacing d₀₀₂ of (002) plane measured by X-ray diffractometry of more than 0.34 nm. The carbon phase in the third particles has electrical conductivity. Therefore, even when gaps are formed around the third particles, contact points between the third particles and surroundings can be kept easily. As a result, reduction in the capacity with repetitive charge/discharge cycles is easily suppressed.

The third particles may have a silicon particle content of 30 mass% or more and 80 mass% or less, or 40 mass% or more and 70 mass% or less. With such a range, the negative electrode can achieve a sufficient high capacity, and cycle characteristics are easily improved.

The silicon particles in the third particles may have an average particle size of, for example, 1 nm or more. The silicon particles may have an average particle size of 1000 nm or less, 500 nm or less, 200 nm or less, or 100 nm or less (or even 50 nm or less). With finer silicon particles, the volume change of the third particles during charging and discharging becomes smaller, and the structural stability of the third particles improves.

The composition, and the component content of the second and third particles can be analyzed by the method described in WO2018/179969.

The content of the elements contained in the Si-containing material can be measured, for example, by inductively coupled plasma emission spectroscopic analysis (ICP-AES). Specifically, the Si-containing material is dissolved in a heated acid solution, and carbon in the solution residue is removed by filtering, and thereafter, the obtained filtrate is analyzed by ICP-AES to measure the spectrum intensity of each element. Subsequently, a calibration curve is prepared using standard solutions of commercially available elements, and the content of each element is calculated.

The second particles and third particles both have a sea-island structure. The silicon particles (island) of the second and third particles are dispersed in a matrix (sea) of the silicate phase and carbon phase respectively, being covered with the lithium ion conductive phase (silicate phase and carbon phase). In the sea-island structure, the contact between the silicon particles and electrolyte is limited, and therefore side reactions are suppressed. Also, the stress caused by expansion and contraction of the silicon particles is relieved in the matrix of the lithium ion conductive phase.

The graphite (graphite particles) included in the negative electrode as the active material may have an average particle size of 13 µm or more and 25 µm or less. Preferably, the graphite has an average particle size larger than the average particle size of the Si-containing material. With this configuration, gaps are formed between relatively large graphite particles, and particles of the Si-containing material are easily accommodated in the gap. Therefore, the filling rate of the active material in the negative electrode can be increased easily, and a negative electrode with an even higher capacity can be obtained easily. The particles of the Si-containing material present in the gaps contribute to maintaining electronic contacts between the graphite particles. Meanwhile, even when the particles of the Si-containing material present in the gaps go through expansion and contraction, it can hardly cause expansion and contraction of the negative electrode as a whole, and therefore deterioration based on charge/discharge cycles are hardly caused.

### (First particles production method)

SiO_{X} as the first particles may be produced by, for example, a vapor deposition method. The SiO_{X} particles may be covered with carbon with the following method. First, the SiO_{X} particles are ground and classified to adjust the particle size. Then, the surface of the obtained particles are covered with carbon by CVD under an argon atmosphere. Then, they are milled and classified to prepare first particles represented by SiO_{X}. For the method of covering the SiO_{X} particles with carbon, various known methods can be used without being limited to the above method. The covering of the SiO_{X} particles with carbon can be omitted.

### (Second particles production method)

Next, an example of the second particles production method is described in detail. The second particles can be produced by a production method other than the method described below. The second particles can be produced by the method described in WO2018/179969.

The second particles are generally synthesized by two processes, a preliminary step of obtaining lithium silicate, and a later step of obtaining second particles from lithium silicate and a raw material silicon. When the element Me is added, the element Me may be added to the raw material of lithium silicate in the preliminary step, but preferably added in the later step so as not to affect lithium silicate synthesis. More specifically, the second particles production method preferably includes a step (i), in which silicon dioxide and a lithium compound are mixed and the produced mixture is baked to obtain lithium silicate, and a step (ii), in which lithium silicate and a raw material silicon (as necessary also element Me) are formed into a composite to obtain second particles including a lithium silicate phase and silicon particles dispersed in the lithium silicate phase.

### (Step (i))

The value of z of the lithium silicate represented by a formula: Li_{2Z}SiO_{2+Z} can be controlled with the atomic ratio Li/Si of lithium to silicon in the mixture of silicon dioxide and the lithium compound. Preferably, to synthesize excellent lithium silicate with less elution of an alkaline component, Li/Si is set to be smaller than 1.

For the lithium compound, for example, lithium carbonate, lithium oxide, lithium hydroxide, lithium hydride, or the like can be used. A kind of these may be used singly, or two or more kinds thereof may be used in combination.

Preferably, the mixture including silicon dioxide and lithium compound is heated in air at 400°C to 1200°C, preferably 800°C to 1100°C to allow silicon dioxide to react with the lithium compound.

### (Step (ii))

Next, the lithium silicate and the raw material silicon are formed into a composite. For example, while applying a shearing force to the mixture of lithium silicate and the raw material silicon (also element Me may be included), the mixture can be ground. As the raw silicon, coarse particles of silicon having an average particle size of about several µm to several tens of µm may be used. Preferably, the silicon particles to be obtained in the end are controlled so that their crystallite size calculated by the Sheller's equation from the half width of the diffraction peak assigned to the Si (111) plane in the XRD pattern is 10 nm or more.

For the material of the element Me used in preparation, oxide, oxalate, nitrate, sulfate, halide, carbonate, and the like of the element Me can be used. In particular, in terms of stability and excellent ion conductivity, Me oxide is preferable. To be more specific, CeO₂, Sc₂O₃, Y₂O₃, Er₂O₃, Tm₂O₃, Yb₂O₃, Lu₂O₃, and the like are used. Also, a compound including elements other than the element Me and oxygen such as yttria-stabilized zirconia can be used. A kind of these may be used singly, or two or more kinds thereof may be used in combination.

For example, the lithium silicate and the raw material silicon (as necessary, also compound of element Me) are mixed at a predetermined mass ratio, and using a grinder such as a ball mill, the mixture can be stirred while making them into fine particles. However, the composite production steps are not limited to these. For example, without using the grinder, silicon nanoparticles and lithium silicate nanoparticles (as necessary, compound of element Me) are synthesized, and mixed.

Then, the mixture formed into fine particles is heated at, for example, in an inert atmosphere (e.g., atmosphere of argon, nitrogen), at 450°C to 1000°C, and baked. At this time, a pressure can be applied to the mixture with a hot press and baked, to produce a sintered product of the mixture. Lithium silicate is stable at 450°C to 1000°C, and generally does not react with silicon, and therefore a capacity reduction that may occur is minute. Upon sintering, silicate melts and flows to fill the gaps between the silicon particles. As a result, a dense block of sintered product having a silicate phase as a sea-portion, and silicon particles as an island-portion can be obtained.

The sintered product is then ground until particulate, to be used as the second particles. At this time, the grinding conditions are suitably selected, to produce the second particles with the average particle size in the above-described range.

After the step (ii), a step (iii) may be performed, in which at least a portion of the surface of the second particle is covered with a conductive material to form a conductive layer. Preferably, the conductive material is stable electrochemically, and a carbon material is preferable. The surface of the particle material can be covered with the carbon material by a CVD method, in which a hydrocarbon gas such as acetylene or methane is used as a raw material. Alternatively, a coal pitch, a petroleum pitch, a phenol resin, or the like is mixed with the second particles and heated. Also, carbon black can be attached to the surface of the second particles.

A step of washing the second particles with acid can be performed. For example, the second particles can be washed with an acidic aqueous solution. The washing with acid allows for dissolving and removing of components such as a trace amount of Li₂SiO₃, which was generated when the raw material silicon and lithium silicate are formed into a composite. As the acidic aqueous solution, an aqueous solution of an inorganic acid such as hydrochloric acid, hydrofluoric acid, sulfuric acid, nitric acid, phosphoric acid, or carbonic acid, or an aqueous solution of an organic acid such as citric acid or acetic acid can be used.

### (Third particles production method)

For an example of the third particles production method, the first and second methods are described below. The third particles can be produced by a production method other than the method described below.

In the first method, first, a raw material silicon and a carbon source are mixed, and using a grinder such as a ball mill, the mixture of the raw material silicon and the carbon source are ground and formed into a composite, while making them into fine particles. An organic solvent may be added to the mixture to perform wet grinding. At this time, the raw material silicon is finely ground to produce silicon particles. The silicon particles are dispersed in a matrix of the carbon source.

For the carbon source, for example, water-soluble resin such as carboxymethyl cellulose (CMC), hydroxyethyl cellulose, polyacrylic acid salt, polyacrylamide, polyvinyl alcohol, polyethylene oxide, and polyvinylpyrrolidone; saccharides such as sucrose and cellulose; petroleum pitch; coal pitch; and tar are used, without particular limitation.

For the organic solvent, an alcohol, ether, fatty acid, alkane, cycloalkane, silicate ester, metal alkoxide, or the like can be used.

Next, the composite of silicon particles and carbon source is heated in an inert gas atmosphere (e.g., atmosphere such as argon, nitrogen) to 700°C to 1200°C. By this heating, the carbon source is carbonized to produce amorphous carbon. In this manner, third particles are obtained, in which silicon particles are dispersed in a carbon phase including amorphous carbon.

In the second method, first, a raw material silicon and carbon material are mixed, and using a grinder such as a ball mill, the mixture of the raw material silicon and carbon material is ground and formed into a composite while making them into fine particles. An organic solvent may be added to the mixture to perform wet grinding. At this time, the raw material silicon is finely ground to produce silicon particles. The silicon particles are dispersed in a matrix of the carbon material.

With the above-described composition of the raw material silicon and carbon material, third particles in which silicon particles are dispersed in a carbon phase of amorphous carbon can be obtained. Afterwards, the third particles may be heated in an inert gas atmosphere to 700°C to 1200°C.

For the carbon material, amorphous carbon is preferable, and graphitizable carbon (soft carbon), non-graphitizable carbon (hard carbon), carbon black, and the like may be used. Examples of the carbon black include acetylene black and Ketjen Black. Even when graphite is used as the carbon material, the crystal structure of graphite is lost mostly when using a grinder to obtain a composite of silicon particles and the carbon material, and a carbon phase of amorphous carbon is formed.

### [Secondary battery]

Next, a secondary battery in an embodiment of the present disclosure is described. The secondary battery of the embodiment of the present disclosure has a negative electrode including the above-described negative electrode material for a secondary battery, a positive electrode, a separator disposed between the positive electrode and negative electrode, and an electrolyte.

### (Negative electrode)

The negative electrode typically includes a negative electrode current collector, a negative electrode active material layer (negative electrode mixture layer) disposed at a surface of the negative electrode current collector. The negative electrode active material layer includes the above-described negative electrode material for a secondary battery. That is, the negative electrode active material layer includes the negative electrode active material, and carbon nanotube, and as necessary, other components other than the negative electrode active material and carbon nanotube. Examples of the other component include a binder, conductive agent, and thickener. For these other components, known components used for secondary batteries may be used. The negative electrode active material includes, as described above, graphite and a Si-containing material.

As the negative electrode current collector, a non-porous conductive substrate (metal foil, etc.), and a porous conductive substrate (mesh-body, net-body, punched sheet, etc.) are used. For the material of the negative electrode current collector, stainless steel, nickel, nickel alloy, copper, copper alloy or the like can be exemplified. The negative electrode current collector has a thickness of, for example, 1 to 50 µm, or may be 5 to 30 µm, without particular limitation.

The negative electrode active material layer may be formed by applying a negative electrode slurry in which a negative electrode mixture is dispersed in a dispersion medium on a surface of the negative electrode current collector to form a coating film, and drying the coating film. The dried coating film may be rolled, if necessary. Examples of the dispersion medium include water, alcohol, ether, N-methyl-2-pyrrolidone (NMP), or a mixture solvent thereof. The ratio of the components in the negative electrode mixture can be adjusted by changing the mixing ratio of the negative electrode mixture material.

Examples of the binder include fluorine resin, polyolefin resin, polyamide resin, polyimide resin, vinyl resin, styrene-butadiene copolymer rubber (SBR), polyacrylic acid, and derivatives and salts thereof. Examples of the conductive agent include a conductive carbon material, fluorinated carbon, and organic conductive material. Examples of the thickener include carboxymethyl cellulose (CMC) and polyvinyl alcohol. For these components, one type of material may be used singly, or two or more types may be used in combination.

Carbon nanotube is included in the negative electrode active material layer as the conductive agent. For the carbon nanotube, those having the above-described average fiber length and average fiber diameter are used. The carbon nanotubes have a significantly large aspect ratio (ratio of length relative to diameter), and therefore even a small amount can exhibit a high electrical conductivity. By using carbon nanotubes as the conductive agent, a high ratio of the negative electrode active material can be achieved in the negative electrode active material layer, while keeping the electrical conductivity of the negative electrode active material layer high. Therefore, the secondary battery can achieve a high capacity.

For the conductive agent, a conductive carbon material other than carbon nanotube can be mixed with carbon nanotube and used. For the conductive carbon material other than carbon nanotube, at least one selected from the group consisting of noncrystalline carbon and carbon fiber can be used. The noncrystalline carbon includes hard carbon and soft carbon. Examples of the soft carbon include carbon black such as acetylene black and Ketjen Black. These materials may be combined to be used as a conductive agent.

The negative electrode active material layer may or may not include a conductive agent other than carbon nanotube. The negative electrode active material layer may include, in addition to carbon nanotube, carbon black as a conductive agent other than carbon nanotube. However, when they are included in a large amount, the ratio of the negative electrode active material in the negative electrode active material layer decreases. Therefore, the mass of the conductive agent other than carbon nanotube included in the negative electrode active material layer may be, 100 times or less (e.g., in a range of 0 to 80 times, 0 to 50 times, or 0 to 10 times) of the mass of the carbon nanotube included in the negative electrode active material layer.

Examples of the carbon nanotubes include carbon nanofiber. Various carbon nanotubes commercially available can be used. Alternatively, carbon nanotubes may be synthesized by a known synthesis method.

### (Positive electrode)

Typically, the positive electrode includes a positive electrode current collector, and a positive electrode active material layer (positive electrode mixture layer) formed on a surface of the positive electrode current collector. The positive electrode mixture layer can be formed by applying a positive electrode slurry in which the positive electrode mixture is dispersed in a dispersion medium on a surface of the positive electrode current collector, and drying the slurry. The dried coating film may be rolled, if necessary. The positive electrode mixture contains a positive electrode active material as an essential component, and may contain a binder, a conductive agent, and the like as an optional component.

For the positive electrode active material, a lithium metal composite oxide may be used. The lithium metal composite oxide may be a composite oxide having a layered structure (e.g., rock salt type crystal structure) including lithium and transition metal. Examples of the lithium metal composite oxide include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiGPO₄, and Li₂GPO₄F. M is at least one selected from the group consisting of Na, Mg, Sc, Y, Mn, Fe, Co, Ni, Cu, Zn, Al, Cr, Pb, Sb, and B. G includes at least a transition element (e.g., at least one element selected from the group consisting of Mn, Fe, Co, and Ni). Here, 0 ≤ a ≤ 1.2, 0 ≤ b ≤ 0.9, and 2.0 ≤ c ≤ 2.3. Note that the value "a" indicating the molar ratio of lithium is increased or decreased by charging and discharging.

To be more specific, the lithium metal composite oxide may be a lithium-nickel composite oxide represented by, for example, LiₐNiₓM₁₋ₓO₂ (where 0 < a ≤ 1.2, 0.8 ≤ x < 1, M is at least one selected from the group consisting of Co, Al, Mn, Fe, Ti, Sr, Na, Mg, Ca, Sc, Y, Cu, Zn, Cr, and B). Preferably, M includes at least one selected from the group consisting of Co, Mn, Al, and Fe. From the viewpoint of stabilities of the crystal structure, Al may be contained as M. For a specific example of such a composite oxide, a lithium-nickel-cobalt-aluminum composite oxide (LiNi_{0.9}Co_{0.05}Al_{0.05}O₂, etc.) is used.

In view of achieving a high capacity, the ratio of Ni in the metal element other than Li included in the lithium metal composite oxide is preferably 80 atom % or more. The Ni ratio in the metal element other than Li may be 85 atom % or more, or 90 atom % or more. The Ni ratio in the metal element other than Li is, for example, preferably 95 atom % or less. When the range is to be limited, these upper and lower limits can be combined arbitrarily.

In the lithium-nickel composite oxide, Co, Mn and/or Al that can be included as a metal element M other than Li and Ni contributes to stabilization of the crystal structure of a composite oxide with a large amount of Ni content. However, in view of reduction in production costs, the Co content is preferably small. A lithium-nickel composite oxide with a small amount of Co content or not including Co may include Mn and Al.

As the binder and the conductive agent, those exemplified for the negative electrode can be used. As the conductive agent, graphite such as natural graphite or artificial graphite may be used.

The shape and thickness of the positive electrode current collector can be selected from the shapes and ranges according to the negative electrode current collector. Examples of the material of the positive electrode current collector may be stainless steel, aluminum, aluminum alloy, and titanium.

The amount of element contained in the lithium metal composite oxide can be measured by, for example, an inductively coupled plasma atomic emission spectroscopy (ICP-AES), an electron probe micro analyzer (EPMA), or energy-dispersive X-ray spectroscopy (EDX).

### (Electrolyte)

The electrolyte includes a solvent and a solute dissolved in the solvent. The solute is an electrolytic salt that goes through ion dissociation in the electrolyte. The solute may include, for example, a lithium salt. The component of the electrolyte other than the solvent and solute is additives. The electrolyte may contain various additives.

For the solvent, known materials can be used. As the solvent, for example, cyclic carbonic acid esters, chain carbonic acid esters, cyclic carboxylic acid esters, chain carboxylic acid esters, or the like is used. Examples of the cyclic carbonic acid esters include propylene carbonate (PC), ethylene carbonate (EC), fluoroethylene carbonate (FEC), and vinylene carbonate (VC). Examples of the chain carbonic acid esters include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). Examples of the chain carboxylic acid esters include non-aqueous solvents such as methyl acetate, ethyl acetate, propyl acetate, methyl propionate (MP), ethyl propionate (EP), and the like. A kind of non-aqueous solvent may be used singly, or two or more kinds thereof may be used in combination.

Examples of the non-aqueous solvent also include cyclic ethers, chain ethers, nitriles such as acetonitrile, and amides such as dimethylformamide.

As the lithium salt, for example, chlorine-containing acid lithium salts (LiClO₄, LiAlCl₄, LiB₁₀Cl₁₀, etc.), fluorine-containing acid lithium salts (LiPF₆, LiPF₂O₂, LiBF₄, LiSbF₆, LiAsF₆, LiCF₃SO₃, LiCF₃CO₂, etc.), fluorine-containing acid imide lithium salts (LiN(FSO₂)₂, LiN(CF₃SO₂)₂, LiN(CF₃SO₂) (C₄F₉SO₂), LiN(C₂F₅SO₂)₂, etc.), and lithium halides (LiCl, LiBr, LiI, etc.) may be used. A kind of lithium salt may be used singly, or two or more kinds thereof may be used in combination.

The electrolyte may have a lithium salt concentration of 1 mol/liter or more and 2 mol/liter or less, or 1 mol/liter or more and 1.5 mol/liter or less. By adjusting the lithium salt concentration within the above-described range, an electrolyte with excellent ion conductivity and suitable viscosity can be produced. However, the lithium salt concentration is not limited to the above-described concentration.

The electrolyte may contain other known additives. Examples of the additive include 1,3-propanesultone, methyl benzene sulfonate, cyclohexylbenzene, biphenyl, diphenyl ether, and fluoro benzene.

### (Separator)

A separator is interposed between the positive electrode and the negative electrode. The separator has excellent ion permeability, and suitable mechanical strength and electrically insulating properties. The separator may be, for example, a microporous thin film, a woven fabric, or a nonwoven fabric. The separator is preferably made of, for example, polyolefin, such as polypropylene and polyethylene. Aramid fiber may also be used to increase mechanical strength.

In an example structure of the non-aqueous electrolyte secondary battery, an electrode group and a non-aqueous electrolyte are accommodated in an outer package, and the electrode group has a positive electrode and a negative electrode wound with a separator interposed therebetween. However, the structure is not limited thereto, and other forms of electrode groups may be used. For example, it can be a laminate electrode group, in which a positive electrode and a negative electrode are laminated with a separator interposed therebetween. The non-aqueous electrolyte secondary batteries may be of any form, for example, a cylindrical type, prismatic type, coin type, button type, laminated type, etc.

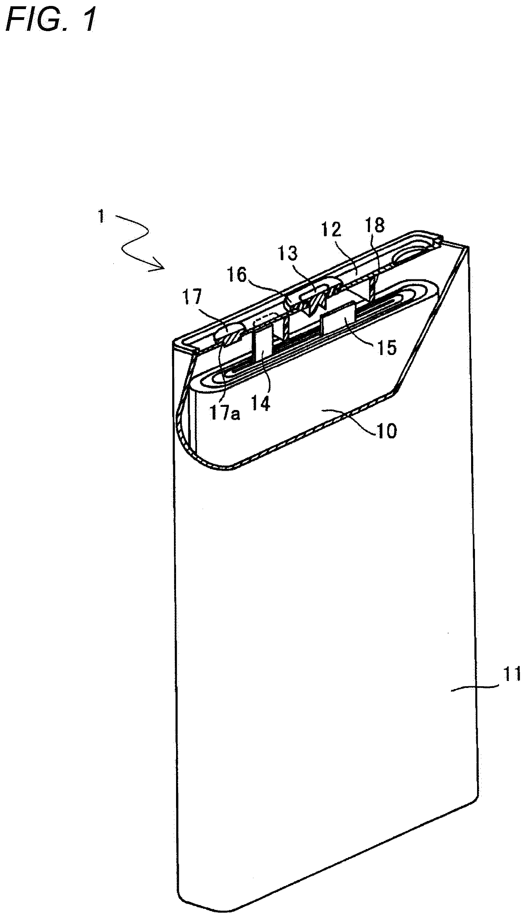

FIG. 1 is a schematic partially cutaway oblique perspective view of a prismatic non-aqueous electrolyte secondary battery of an embodiment of the present disclosure.

The secondary battery 1 as shown in FIG. 1 includes a bottomed prismatic battery case 11, and an electrode group 10 and a non-aqueous electrolyte (not shown) accommodated in the battery case 11. The electrode group 10 includes an elongated strip negative electrode, an elongated strip positive electrode, and a separator interposed and preventing direct contact therebetween. The electrode group 10 is formed by winding the negative electrode, positive electrode, and separator with a flat plate winding core as a center, and removing the core.

One end of the negative electrode lead 15 is attached to the negative electrode current collector of the negative electrode by welding, etc. One end of the positive electrode lead 14 is attached to the positive electrode current collector of the positive electrode by welding, etc. The other end of the negative electrode lead 15 is electrically connected to a negative electrode terminal 13 provided at a sealing plate 12. A gasket 16 is disposed between the sealing plate 12 and the negative electrode terminal 13 to insulate therebetween. The other end of the positive electrode lead 14 is electrically connected to the battery case 11 also working as the positive electrode terminal and connected to the sealing plate 12. A resin-made frame 18 is disposed at an upper portion of the electrode group 10. The frame 18 separates the electrode group 10 from the sealing plate 12, and separates the negative electrode lead 15 from the battery case 11. An opening of the battery case 11 is sealed with a sealing plate 12. An injection port 17a is formed at the sealing plate 12. An electrolyte is injected from the injection port 17a into the battery case 11. Afterwards, the injection port 17a is plugged with a sealing plug 17.

In the following, the present disclosure will be described in detail based on Examples and Comparative Examples, but the present disclosure is not limited to Examples below.

### (1) Negative electrode production

A negative electrode active material, sodium polyacrylate (PAA-Na), carboxymethyl cellulose sodium (CMC-Na), styrene-butadiene rubber (SBR), carbon nanotube (CNT), and water were mixed at a predetermined mass ratio, to prepare a negative electrode slurry. For the carbon nanotube, those having the average fiber length and average fiber diameter shown in Table 1 to Table 6 was used. For the negative electrode active material, a mixture of graphite and the Si-containing material was used.

Next, a coating film was formed by applying the negative electrode slurry on a surface of a copper foil (negative electrode current collector). The coating film was dried and rolled. In this manner, a negative electrode active material layer was formed on both sides of copper foil. The mixing ratio of the carbon nanotube in the negative electrode slurry was set to a mass% shown in Table 1, setting the negative electrode active material (total of graphite and Si-containing material) as 100 mass%. The mixing ratio of the negative electrode active material, sodium polyacrylate, carboxymethyl cellulose sodium, and styrene-butadiene rubber in the negative electrode slurry was, negative electrode active material: PAA-Na: CMC-Na: SBR = 100:0.5:1:1 based on the mass ratio.

First particles as the Si-containing material, the second particles, and the third particles were produced with the following method.

The first particles were produced with the following method. First, SiO_{X} (X = 1.20) was produced by a vapor deposition method. The obtained SiO_{X} was ground and classified to adjust the particle size. Then, surfaces of the produced particles were covered with carbon by a CVD method under an argon atmosphere. Then, they were milled and classified, thereby preparing the first particles.

The second particles were produced with the following method. First, silicon dioxide and lithium carbonate were mixed at an atomic ratio Si/Li of 1.05, and the mixture was baked at 950°C in air for 10 hours, thereby producing lithium silicate represented by a formula: Li₂Si₂O₅. The obtained lithium silicate was ground to give an average particle size of 10 µm.

Then, the obtained lithium silicate, raw material silicon (3N, average particle size 10 µm), and yttrium oxide (Y₂O₃) were mixed at a mass ratio of 50:50:0.0005. The mixture was put into a pot (made of SUS, volume: 500 mL) of a planetary ball mill (manufactured by Fritsch Co., Ltd., P-5), and 24 balls made of SUS (diameter: 20 mm) were placed in the pot. The lid was closed, and the mixture was subjected to grinding at 200 rpm for 50 hours in an inert atmosphere. Next, the powder mixture was taken out in an inert atmosphere, and baked for 4 hours at 800°C in an inert atmosphere while applying pressure by a hot pressing machine, to obtain a sintered body (mother particles) of the mixture.

Thereafter, the sintered product was ground and passed through a 40 µm mesh, and then mixed with coal-pitch (MCP250, JFE Chemical Corporation). The mixture was baked at 800°C in an inert atmosphere, and the surfaces of the ground particles were covered with conductive carbon to form a conductive layer. The coating mass of the conductive layer was 5 mass% relative to the total mass of the ground particles. Thereafter, second particles having an average particle size of 5 µm having a conductive layer were obtained using a sieve.

The third particles were produced with the following method. Coal pitch (MCP250 manufactured by JFE Chemical Co., Ltd.) as a carbon source, and a raw material silicon (3N, average particle size 10 µm) were mixed at a mass ratio of 50:50. The mixture was put into a pot (made of SUS, volume: 500 mL) of a planetary ball mill (manufactured by Fritsch Co., Ltd., P-5), and 24 balls made of SUS (diameter: 20 mm) were placed in the pot. The lid was closed, and the mixture was subjected to grinding at 200 rpm for 50 hours in an inert atmosphere, thereby producing a composite of silicon particles and the carbon source.

Next, the composite of silicon particles and carbon source was baked in an inert gas atmosphere, to carbonize the carbon source, thereby producing a silicon-containing material including amorphous carbon and silicon particles dispersed in the carbon phase. Afterwards, using a jet mill, third particles having an average particle size of 10 µm were produced.

Table 1 to Table 6 show the mass-based content of the first particles, second particles, third particles, and carbon nanotube relative to the negative electrode active material (total of graphite and Si-containing material) used in each of the battery, and the average fiber length and average fiber diameter of the carbon nanotube.

### (2) Positive electrode production

For the positive electrode active material, LiNi_{0.88}Co_{0.09}Al_{0.03}O₂ was used. The positive electrode active material, acetylene black, polyvinylidene fluoride, N-methyl-2-pyrrolidone (NMP) were mixed at a predetermined mass ratio to prepare a positive electrode slurry. Next, the positive electrode slurry was applied to the surface of aluminum foil as a positive electrode current collector, and the coating film was dried, and then rolled to form a positive electrode mixture layer on both surfaces of the aluminum foil.

### (3) Electrolyte preparation

To a solvent mixture including ethylene carbonate (EC) and ethyl methyl carbonate (EMC) at a volume ratio of 3:7, LiPF₆ was added as lithium salt, thereby preparing an electrolyte. The concentration of LiPF₆ in the non-aqueous electrolyte was set to 1.3 mol/liter.

### (4) Secondary battery production

A lead-tab was attached to each of the electrodes. Then, the positive electrode and negative electrode were wound in a spiral shape with the separator interposed so that the leads were positioned at the outermost peripheral portion. The electrode group was produced in this manner. Then, the electrode group was inserted into a laminate film-made outer case with an aluminum foil as a barrier layer, and vacuum dried. Next, the non-aqueous electrolyte was injected into the outer case, and the opening of the outer case was sealed. A secondary battery was produced in this manner.

In this manner, a plurality of secondary batteries A1 to A36, B1 to B3 having different Si-containing material contents relative to the entire negative electrode active material, ratios of the first particles, second particles, and third particles in the Si-containing material, and the average fiber length, average fiber diameter, and contents of carbon nanotube were made and evaluated. A1 to A36 correspond to Examples, and B1 to B3 correspond to Comparative Examples.

In the batteries A1 to A14, B1 and B2 shown in Table 1, the first particles and second particles were mixed and used as the Si-containing material. The ratio of the first particles relative to the entire negative electrode active material and the ratio of the second particles relative to the entire negative electrode active material were each set to 3 mass%.

In the batteries A15 to A18 and B3 shown in Table 2, the first particles were used as the Si-containing material, and the ratio of the first particles relative to the entire negative electrode active material was set to 10 mass%.

In the batteries A19 to A22 shown in Table 3, the first particles were used as the Si-containing material, and the ratio of the first particles relative to the entire negative electrode active material was changed in a range of 7.5 mass% to 20 mass%.

In the batteries A23 to A28 and A36 shown in Table 4, the first particles, second particles, and third particles were mixed and used as the Si-containing material. The ratio of the first particles, second particles, and third particles relative to the entire negative electrode active material was set to 2.1 mass%, 3 mass%, and 3.2 mass%, respectively.

In the batteries A29 to A32 shown in Table 5, the third particles were used as the Si-containing material, and the ratio of the third particles relative to the entire negative electrode active material was set to 15 mass%.

In the batteries A33 to A35 shown in Table 6, the first particles and second particles were mixed and used for the Si-containing material. The ratio of the first particles and second particles relative to the entire negative electrode active material was set to 3 mass% and 5.5 mass%, respectively.

### (5) Evaluation

### (Capacity degradation rate)

The batteries obtained above were subjected to constant current charging until the voltage reached 4.2 V at a current of 0.5 It, and thereafter, subjected to constant voltage charging at a constant voltage of 4.2 V until the current reached 0.02 It in an environment of 25°C. Thereafter, the batteries were subjected to constant current discharging at a current of 1.0 It until the voltage reached 2.5 V. Afterwards, they were allowed to stand for 20 minutes. The above operation (charge/discharge cycle) was repeated 100 times. Charging and discharging were performed in an environment of 25°C.

Setting the discharge capacity of initial discharging as C₀, the discharge capacities were measured after the above-described charge/discharge cycle was repeated 50 times and 100 times, and regarded as C₅₀ and C₁₀₀, respectively. The change amount of the capacity retention rate per one cycle was determined based on the formula below, and evaluated as degradation rate (%). $\left(degradation rate \left(%\right)\right) = 100 \times \left({C}_{50}-{C}_{100}\right) / \left({C}_{0}\times 50\right)$

Table 1 to Table 6 show the evaluation results of the degradation rate of the batteries A1 to A36 and B1 to B3. In Table 1, Table 2, Table 4, and Table 5, the relative degradation rate are also shown, setting the case where the negative electrode active material composition (ratio of first particles, second particles, third particles relative to total of graphite and Si-containing material) the same and the average fiber length of the added CNT is 3.23 µm as the benchmark. In each of the compositions, when the carbon nanotube had an average fiber diameter of 0.5 to 6 nm, and the average fiber length of 1.2 to 8 µm in the negative electrode mixture layer, the degradation rate per 1 cycle of charge/discharge can be reduced.

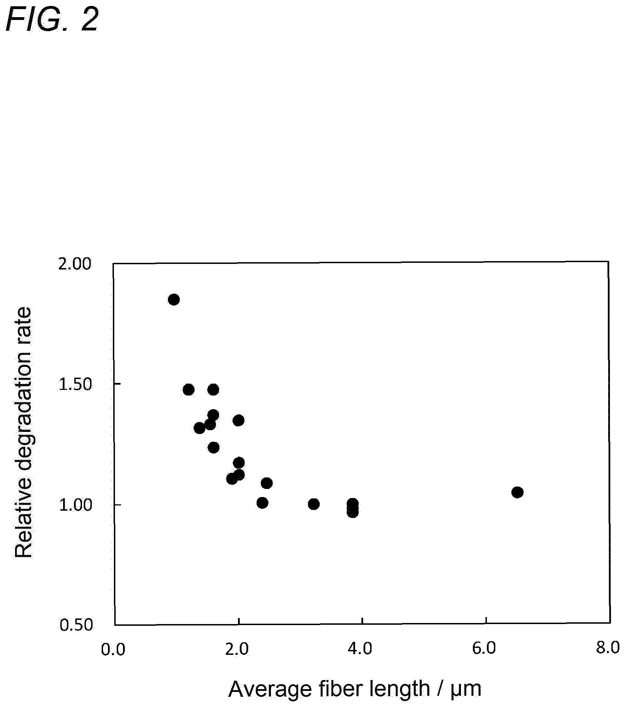

FIG. 2 is a graph showing changes in relative degradation rate for the changes in the average fiber length of carbon nanotube, based on the batteries A1 to A7, A9, A11, A15 to A18, A23, A26 to A32, A36 and B3. As shown in FIG. 2, the relative degradation rate dramatically reduced around the average fiber length of 1 µm. With the average fiber length of 2 µm or more, the relative degradation rate reduced to about the level of 60% of the battery B3, in which the carbon nanotube had an average fiber length of 1 µm. Meanwhile, when the average fiber length is over 2 µm, the reduction in the relative degradation rate was small. As the average fiber length of the carbon nanotube gets longer, the carbon nanotubes tend to coagulate, and the slurry viscosity increases. The carbon nanotube has an average fiber length of 8 µm or less and preferably 4 µm or less in terms of suppressing increase in the slurry viscosity, and easily producing the negative electrode mixture layer. When the carbon nanotube has an average fiber length of 4 µm or less, the carbon nanotube coagulation is suppressed, and an excellently dispersed slurry can be easily obtained.

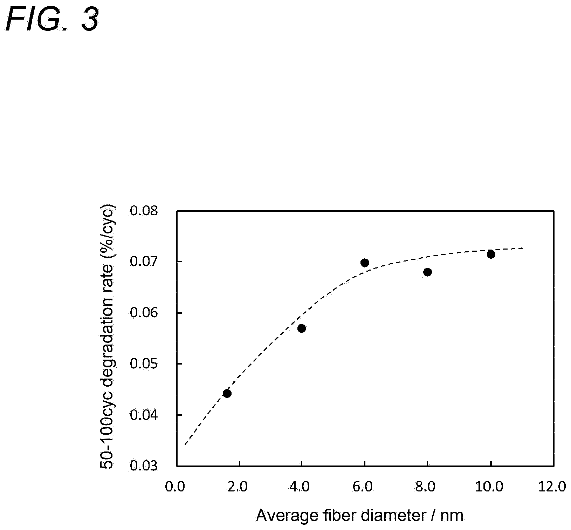

FIG. 3 is a graph showing changes in degradation rate for changes in the carbon nanotube average fiber diameter, based on the batteries A5, A11, A14, B1 and B2. As shown in FIG. 3, when the carbon nanotube had an average fiber diameter in a range of more than 6 nm, the degradation rate reduced more than the battery B3, but the reduction amount is small. Meanwhile, when the carbon nanotube had an average fiber diameter in a range of 6 nm or less, the degradation rate significantly reduced. When the carbon nanotube had an average fiber diameter of 4 nm or less, significantly low degradation rate was obtained, and the increase in the slurry viscosity can be suppressed.

**[Table 1]**

| Battery | material including silicon content (wt%) | | | Carbon nanotube | | | Degradation rate (%/cyc) | Degradation rate relative to average fiber length 3.23 µm |
|---|---|---|---|---|---|---|---|---|
| | First particles (SiO_{X}) | Second particles (Li_{X}SiO_{Y}) | Third particles (SiC) | Content (wt%) | Average fiber length (µm) | Average fiber diameter (nm) | | |
| A1 | 3.00 | 3.00 | 0.00 | 0.02 | 2.46 | 1.6 | 0.0481 | 1.087 |
| A2 | 3.00 | 3.00 | 0.00 | 0.02 | 1.55 | 1.6 | 0.0589 | 1.331 |
| A3 | 3.00 | 3.00 | 0.00 | 0.02 | 1.38 | 1.6 | 0.0583 | 1.317 |
| A4 | 3.00 | 3.00 | 0.00 | 0.02 | 1.20 | 1.6 | 0.0653 | 1.475 |
| A5 | 3.00 | 3.00 | 0.00 | 0.02 | 1.36 | 4.0 | 0.0570 | 1.287 |
| A6 | 3.00 | 3.00 | 0.00 | 0.02 | 3.86 | 4.0 | 0.0506 | 1.144 |
| A7 | 3.00 | 3.00 | 0.00 | 0.02 | 2.39 | 1.6 | 0.0445 | 1.005 |
| A8 | 3.00 | 3.00 | 0.00 | 0.005 | 3.86 | 1.6 | 0.0577 | 1.304 |
| A9 | 3.00 | 3.00 | 0.00 | 0.02 | 3.23 | 1.6 | 0.0443 | 1.000 |
| A10 | 3.00 | 3.00 | 0.00 | 0.04 | 3.86 | 1.6 | 0.0471 | 1.063 |
| A11 | 3.00 | 3.00 | 0.00 | 0.02 | 3.86 | 1.6 | 0.0443 | 1.000 |
| A12 | 3.00 | 3.00 | 0.00 | 0.01 | 3.86 | 1.6 | 0.0411 | 0.929 |
| A13 | 3.00 | 3.00 | 0.00 | 0.005 | 3.86 | 1.6 | 0.0543 | 1.226 |
| A14 | 3.00 | 3.00 | 0.00 | 0.02 | 3.07 | 8.0 | 0.0680 | 1.535 |
| B1 | 3.00 | 3.00 | 0.00 | 0.02 | 20 | 6.0 | 0.0698 | 1.577 |
| B2 | 3.00 | 3.00 | 0.00 | 0.02 | 2.05 | 10.0 | 0.0715 | 1.615 |

**[Table 2]**

| Battery | material including silicon content (wt%) | | | Carbon nanotube | | | Degradation rate (%/cyc) | Degradation rate relative to average fiber length 3.23 µm |
|---|---|---|---|---|---|---|---|---|
| | First particles (SiO_{X}) | Second particles (Li_{X}SiO_{Y}) | Third particles (SiC) | Content (wt%) | Average fiber length (µm) | Average fiber diameter (nm) | | |
| A15 | 10.00 | 0.00 | 0.00 | 0.02 | 3.23 | 1.6 | 0.0404 | 1.000 |
| A16 | 10.00 | 0.00 | 0.00 | 0.02 | 2.01 | 1.6 | 0.0453 | 1.122 |
| A17 | 10.00 | 0.00 | 0.00 | 0.02 | 1.90 | 1.6 | 0.0447 | 1.107 |
| A18 | 10.00 | 0.00 | 0.00 | 0.02 | 1.60 | 1.6 | 0.0500 | 1.237 |
| B3 | 10.00 | 0.00 | 0.00 | 0.02 | 0.97 | 1.6 | 0.0747 | 1.849 |

**[Table 3]**

| Battery | material including silicon content(wt%) | | | Carbon nanotube | | | Degradation rate (%/cyc) |
|---|---|---|---|---|---|---|---|
| | First particles (SiO_{X}) | Second particles (Li_{X}SiO_{Y}) | Third particles (SiC) | Content (wt%) | Average fiber length (µm) | Average fiber diameter (nm) | |
| A19 | 7.50 | 0.00 | 0.00 | 0.02 | 3.86 | 1.6 | 0.0483 |
| A20 | 10.00 | 0.00 | 0.00 | 0.02 | 3.86 | 1.6 | 0.0470 |
| A21 | 15.00 | 0.00 | 0.00 | 0.02 | 3.86 | 1.6 | 0.0536 |
| A22 | 20.00 | 0.00 | 0.00 | 0.02 | 3.86 | 1.6 | 0.0547 |

**[Table 4]**

| Battery | material including silicon content(wt%) | | | Carbon nanotube | | | Degradation rate (%/cyc) | Degradation rate relative to average fiber length 3.23 µm |
|---|---|---|---|---|---|---|---|---|
| | First particles (SiO_{X}) | Second particles (Li_{X}SiO_{Y}) | Third particles (SiC) | Content (wt%) | Average fiber length (µm) | Average fiber diameter (nm) | | |
| A23 | 2.10 | 3.00 | 3.20 | 0.02 | 3.86 | 1.6 | 0.0530 | 0.981 |
| A24 | 2.10 | 3.00 | 3.20 | 0.005 | 3.86 | 1.6 | 0.0692 | 1.281 |
| A25 | 2.10 | 3.00 | 3.20 | 0.04 | 3.86 | 1.6 | 0.0551 | 1.020 |
| A26 | 2.10 | 3.00 | 3.20 | 0.02 | 3.23 | 1.6 | 0.0540 | 1.000 |
| A27 | 2.10 | 3.00 | 3.20 | 0.02 | 2.01 | 1.6 | 0.0633 | 1.172 |
| A28 | 2.10 | 3.00 | 3.20 | 0.02 | 1.60 | 1.6 | 0.0740 | 1.370 |
| A36 | 2.10 | 3.00 | 3.20 | 0.02 | 6.51 | 1.6 | 0.0564 | 1.044 |

**[Table 5]**

| Battery | material including silicon content (wt%) | | | Carbon nanotube | | | Degradation rate (%/cyc) | Degradation rate relative to average fiber length 3.23 µm |
|---|---|---|---|---|---|---|---|---|
| | First particles (SiO_{X}) | Second particles (Li_{X}SiO_{Y}) | Third particles (SiC) | Content (wt%) | Average fiber length (µm) | Average fiber diameter (nm) | | |
| A29 | 0.00 | 0.00 | 15.00 | 0.02 | 3.86 | 1.6 | 0.0820 | 0.965 |
| A30 | 0.00 | 0.00 | 15.00 | 0.02 | 3.23 | 1.6 | 0.0850 | 1.000 |
| A31 | 0.00 | 0.00 | 15.00 | 0.02 | 2.01 | 1.6 | 0.1145 | 1.347 |
| A32 | 0.00 | 0.00 | 15.00 | 0.02 | 1.60 | 1.6 | 0.1254 | 1.475 |

**[Table 6]**

| Battery | material including silicon content (wt%) | | | Carbon nanotube | | | Degradation rate (%/cyc) |
|---|---|---|---|---|---|---|---|
| | First particles (SiO_{X}) | Second particles (Li_{X}SiO_{Y}) | Third particles (SiC) | Content (wt%) | Average fiber length (µm) | Average fiber diameter (nm) | |
| A33 | 3.00 | 5.50 | 0.00 | 0.01 | 3.86 | 1.6 | 0.0395 |
| A34 | 3.00 | 5.50 | 0.00 | 0.02 | 3.86 | 1.6 | 0.0507 |
| A35 | 3.00 | 5.50 | 0.00 | 0.04 | 3.86 | 1.6 | 0.0543 |

### Industrial Applicability

With the secondary battery of the present disclosure, a secondary battery with a high capacity and also with excellent cycle characteristics can be provided. The secondary battery according to the present disclosure is useful for a main power source of a mobile communication device, a portable electronic device, or the like.

Although the present invention has been described in terms of the presently preferred embodiments, it is to be understood that such disclosure is not to be interpreted as limiting. The present invention is defined by the appended claims.

### Description of Reference Numerals

1: non-aqueous electrolyte secondary battery, 10: electrode group, 11: battery case, 12: sealing plate, 13: negative electrode terminal, 14: positive electrode lead, 15: negative electrode lead, 16: gasket, 17: sealing plug, 17a: injection port, 18: frame

## Claims

1. A negative electrode material for a secondary battery, comprising a negative electrode active material and a carbon nanotube,
wherein the negative electrode active material includes graphite and a material including a silicon element, and
the carbon nanotube has an average fiber diameter of 0.5 nm to 6 nm and an average fiber length of 1.2 µm to 8 µm.

2. The negative electrode material for a secondary battery of claim 1, wherein the graphite has an average particle size of 10 µm to 30 µm, and the material including a silicon element has an average particle size of 1 µm to 20 µm.

3. The negative electrode material for a secondary battery of claim 1 or 2, wherein the carbon nanotube has an average fiber diameter of 1 nm to 4 nm.

4. The negative electrode material for a secondary battery of any one of claims 1 to 3, wherein the carbon nanotube has an average fiber length of 2 µm to 4 µm.

5. The negative electrode material for a secondary battery of any one of claims 1 to 4, wherein a carbon nanotube content relative to the entire negative electrode active material is 0.005 mass% to 0.1 mass%.

6. The negative electrode material for a secondary battery of claim 5, wherein the carbon nanotube content relative to the entire negative electrode active material is 0.005 mass% to 0.07 mass%.

7. The negative electrode material for a secondary battery of any one of claims 1 to 6, wherein the material including a silicon element includes at least one of the particles selected from the group consisting of first particles including silicon oxide represented by a formula SiOx(0.5 ≤ X< 1.6), second particles including a lithium silicate phase and a silicon phase dispersed in the lithium silicate phase, and third particles including a carbon phase and a silicon phase dispersed in the carbon phase.

8. The negative electrode material for a secondary battery of any one of claims 1 to 7, wherein a content of the material including a silicon element is 5 mass% to 50 mass% relative to a total of the graphite and the material including a silicon element.

9. The negative electrode material for a secondary battery of claim 8, wherein the content of the material including a silicon element is 6 mass% to 20 mass% relative to a total of the graphite and the material including a silicon element.

10. The negative electrode material for a secondary battery of any one of claims 1 to 9, wherein the material including a silicon element has an average particle size of 5 µm to 15 µm.

11. A secondary battery (1) comprising a negative electrode including the negative electrode material for a secondary battery of any one of claims 1 to 10, a positive electrode, a separator interposed between the positive electrode and the negative electrode, and an electrolyte.

## Patentansprüche

1. Negativelektrodenmaterial für eine Sekundärbatterie, umfassend ein Negativelektroden-Aktivmaterial und ein Kohlenstoffnanoröhrchen,
wobei das Negativelektroden-Aktivmaterial Graphit und ein Material, das ein Siliciumelement enthält, umfasst, und
das Kohlenstoffnanoröhrchen einen mittleren Faserdurchmesser von 0,5 nm bis 6 nm und eine mittlere Faserlänge von 1,2 µm bis 8 µm aufweist.

2. Negativelektrodenmaterial für eine Sekundärbatterie nach Anspruch 1, wobei der Graphit eine mittlere Partikelgröße von 10 µm bis 30 µm aufweist, und das Material, das ein Siliciumelement enthält, eine mittlere Partikelgröße von 1 µm bis 20 µm aufweist.

3. Negativelektrodenmaterial für eine Sekundärbatterie nach Anspruch 1 oder 2, wobei das Kohlenstoffnanoröhrchen einen mittleren Faserdurchmesser von 1 nm bis 4 nm aufweist.

4. Negativelektrodenmaterial für eine Sekundärbatterie nach einem der Ansprüche 1 bis 3, wobei das Kohlenstoffnanoröhrchen eine mittlere Faserlänge von 2 µm bis 4 µm aufweist.

5. Negativelektrodenmaterial für eine Sekundärbatterie nach einem der Ansprüche 1 bis 4, wobei ein Gehalt an Kohlenstoffnanoröhrchen bezogen auf das gesamte Negativelektroden-Aktivmaterial 0,005 Masse-% bis 0,1 Masse-% beträgt.

6. Negativelektrodenmaterial für eine Sekundärbatterie nach Anspruch 5, wobei der Gehalt an Kohlenstoffnanoröhrchen bezogen auf das gesamte Negativelektroden-Aktivmaterial 0,005 Masse-% bis 0,07 Masse-% beträgt.

7. Negativelektrodenmaterial für eine Sekundärbatterie nach einem der Ansprüche 1 bis 6, wobei das Material, das ein Siliciumelement enthält, mindestens eine der Partikeln umfasst, die aus der Gruppe ausgewählt sind, bestehend aus ersten Partikeln, die ein durch eine Formel SiO_{X} (0,5 ≤ X < 1,6) dargestelltes Siliciumoxid umfassen, zweiten Partikeln, die eine Lithiumsilicatphase und eine in der Lithiumsilicatphase dispergierte Siliciumphase umfassen, und dritten Partikeln, die eine Kohlenstoffphase und eine in der Kohlenstoffphase dispergierte Siliciumphase umfassen.

8. Negativelektrodenmaterial für eine Sekundärbatterie nach einem der Ansprüche 1 bis 7, wobei ein Gehalt des Materials, das ein Siliciumelement enthält, 5 Masse-% bis 50 Masse-% bezogen auf eine Gesamtmenge des Graphits und des Materials, das ein Siliciumelement enthält, beträgt.

9. Negativelektrodenmaterial für eine Sekundärbatterie nach Anspruch 8, wobei der Gehalt des Materials, das ein Siliciumelement enthält, 6 Masse-% bis 20 Masse-% bezogen auf eine Gesamtmenge des Graphits und des Materials, das ein Siliciumelement enthält, beträgt.

10. Negativelektrodenmaterial für eine Sekundärbatterie nach einem der Ansprüche 1 bis 9, wobei das Material, das ein Siliciumelement enthält, eine mittlere Partikelgröße von 5 µm bis 15 µm aufweist.

11. Sekundärbatterie (1), umfassend eine Negativelektrode, die das Negativelektrodenmaterial für eine Sekundärbatterie nach einem der Ansprüche 1 bis 10 umfasst, eine Positivelektrode, einen zwischen der Positivelektrode und der Negativelektrode angeordneten Separator und einen Elektrolyten.

## Revendications

1. Matériau d'électrode négative pour une batterie secondaire, comprenant un matériau actif d'électrode négative et un nanotube de carbone,
dans lequel le matériau actif d'électrode négative comprend du graphite et un matériau comprenant un élément silicium, et
le nanotube de carbone a un diamètre de fibre moyen de 0,5 nm à 6 nm et une longueur de fibre moyenne de 1,2 µm à 8 µm.

2. Matériau d'électrode négative pour une batterie secondaire selon la revendication 1, dans lequel le graphite a une taille de particule moyenne de 10 µm à 30 µm, et le matériau comprenant un élément silicium a une taille de particule moyenne de 1 µm à 20 µm.

3. Matériau d'électrode négative pour une batterie secondaire selon la revendication 1 ou 2, dans lequel le nanotube de carbone a un diamètre de fibre moyen de 1 nm à 4 nm.

4. Matériau d'électrode négative pour une batterie secondaire selon l'une quelconque des revendications 1 à 3, dans lequel le nanotube de carbone a une longueur de fibre moyenne de 2 µm à 4 µm.

5. Matériau d'électrode négative pour une batterie secondaire selon l'une quelconque des revendications 1 à 4, dans lequel une teneur en nanotube de carbone par rapport à l'ensemble du matériau actif d'électrode négative est de 0,005 % en masse à 0,1 % en masse.

6. Matériau d'électrode négative pour une batterie secondaire selon la revendication 5, dans lequel la teneur en nanotube de carbone par rapport à l'ensemble du matériau actif d'électrode négative est de 0,005 % en masse à 0,07 % en masse.

7. Matériau d'électrode négative pour une batterie secondaire selon l'une quelconque des revendications 1 à 6, dans lequel le matériau comprenant un élément silicium comprend au moins l'une des particules choisies dans le groupe constitué de premières particules comprenant un oxyde de silicium représenté par une formule SiO_{X} (0,5 ≤ X < 1,6), de deuxièmes particules comprenant une phase de silicate de lithium et une phase de silicium dispersée dans la phase de silicate de lithium, et de troisièmes particules comprenant une phase de carbone et une phase de silicium dispersée dans la phase de carbone.

8. Matériau d'électrode négative pour une batterie secondaire selon l'une quelconque des revendications 1 à 7, dans lequel une teneur du matériau comprenant un élément silicium est de 5 % en masse à 50 % en masse par rapport à un total du graphite et du matériau comprenant un élément silicium.

9. Matériau d'électrode négative pour une batterie secondaire selon la revendication 8, dans lequel la teneur du matériau comprenant un élément silicium est de 6 % en masse à 20 % en masse par rapport à un total du graphite et du matériau comprenant un élément silicium.

10. Matériau d'électrode négative pour une batterie secondaire selon l'une quelconque des revendications 1 à 9, dans lequel le matériau comprenant un élément silicium a une taille de particule moyenne de 5 µm à 15 µm.

11. Batterie secondaire (1) comprenant une électrode négative comprenant le matériau d'électrode négative pour une batterie secondaire selon l'une quelconque des revendications 1 à 10, une électrode positive, un séparateur interposé entre l'électrode positive et l'électrode négative, et un électrolyte.
